# EUROPÄISCHE PATENTSCHRIFT

(11) **EP 2 478 253 B1**
(45) Veröffentlichungstag und Bekanntmachung des Hinweises auf die Patenterteilung: **26.03.2014**
(21) Anmeldenummer: 10734131.5
(22) Anmeldetag: 20.07.2010
(51) Int. Cl.: F16F 1/373, F16F 15/08

(54) **VORRICHTUNG ZUR SCHWINGUNGSDÄMPFENDEN LAGERUNG EINES FLUIDAGGREGATS UND ZUGEHÖRIGES FLUIDAGGREGAT**
DEVICE FOR VIBRATION-DAMPING MOUNTING OF A FLUID ASSEMBLY AND ASSOCIATED FLUID ASSEMBLY
DISPOSITIF POUR LE MONTAGE ANTIVIBRATILE D'UN ORGANE FLUIDIQUE ET ORGANE FLUIDIQUE ASSOCIÉ

(30) Priorität: 18.09.2009 DE 102009029569
(43) Veröffentlichungstag der Anmeldung: 25.07.2012
(73) Patentinhaber: Robert Bosch GmbH, 70442 Stuttgart (DE)
(72) Erfinder: MAYR, Matthias, Rettenberg 87549 (DE); WEH, Andreas, 87477 Sulzberg (DE)
(86) Internationale Anmeldenummer: PCT/EP2010/060479
(87) Internationale Veröffentlichungsnummer: WO 2011/032747

(56) Entgegenhaltungen:
- DE-A1- 10 036 575
- DE-A1- 10 245 797
- DE-A1-102005 046 631
- US-A- 2 830 780
- US-A- 4 358 098
- US-A1- 2008 157 447

## Beschreibung

### Stand der Technik

Die Erfindung betrifft eine Vorrichtung zur schwingungsdämpfenden Lagerung eines Fluidaggregats nach der Gattung des unabhängigen Patentanspruchs 1 und ein zugehöriges Fluidaggregat nach der Gattung des unabhängigen Patentanspruchs 10.

In der DE 100 36 575 A1 wird beispielsweise eine Vorrichtung zur elastischen Lagerung eines hydraulischen Aggregats einer Fahrzeugbremsanlage in einem Fahrzeug beschrieben. Die beschriebene Vorrichtung umfasst einen Stehbolzen, ein vom Stehbolzen durchgriffenes hülsenförmiges Dämpfungselement, das eine nach außen offene Aufnahmenut aufweist, welche in eine zugeordnete Aufnahmeöffnung einer Befestigungskonsole einführbar ist, eine vom Stehbolzen geführte Spannhülse und ein Schraubelement mit einem Innengewinde. Der Stehbolzen ist über einen Verbindungszapfen mit dem Aggregat verbindbar und weist einen Gewindeschaft mit einem Außengewinde auf, auf welchen das Schraubelement aufschraubbar ist, um die Spannhülse axial auf dem Stehbolzen so gegen das Dampfungselement zu bewegen, dass das Dampfungselement im gespannten Zustand sowohl radial aufgeweitet als auch axial verkürzt ist.

In der US 2008/0157447 A1 wird ebenfalls eine Vorrichtung zur elastischen Lagerung eines hydraulischen Aggregats einer Fahrzeugbremsanlage in einem Fahrzeug beschrieben. Die beschriebene Vorrichtung umfasst einen Stehbolzen, ein vom Stehbolzen durchgriffenes hülsenförmiges Dämpfungselement, das eine nach außen offene Aufnahmenut aufweist, welche in eine zugeordnete Aufnahmeöffnung einer Befestigungskonsole einführbar ist, eine vom Stehbolzen geführte Spannhülse und ein Schraubelement mit einem Innengewinde. Der Stehbolzen ist über einen Verbindungszapfen mit dem Aggregat verbindbar und weist einen Gewindeschaft mit einem Außengewinde auf, auf welchen das Schraubelement aufschraubbar ist, um die Spannhülse axial auf dem Stehbolzen so gegen das Dämpfungselement zu bewegen, dass das Dämpfungselement im gespannten Zustand sowohl radial aufgeweitet als auch axial verkürzt ist.

In der US 4,358,098 A wird eine Vorrichtung zur Befestigung einer Platte auf einem geschweißten Stehbolzen beschrieben. Die beschriebene Vorrichtung umfasst ein vom Stehbolzen durchgriffenes hülsenförmiges Dämpfungselement, das eine nach außen offene Aufnahmenut aufweist, welche in eine zugeordnete Aufnahmeöffnung der Platte einführbar ist, und eine vom Stehbolzen geführte Hülse mit einem Schraubelement mit einem Innengewinde. Der Stehbolzen weist einen Gewindeschaft mit einem Außengewinde auf, auf welchen das Schraubelement aufschraubbar ist, um die Hülse axial bis zum Anschlag auf dem Stehbolzen zu bewegen, so dass die Hülse das Dämpfungselement vollständig durchgreift, ohne das Dämpfungselement zu spannen, d.h. ohne das Dämpfungselement radial aufzuweiten und/oder axial zu verkürzen.

In der DE 10 2005 046 631 A1 wird eine Vorrichtung zur elastischen Lagerung eines hydraulischen Aggregats einer Fahrzeugbremsanlage in einem Fahrzeug beschrieben. Die beschriebene Vorrichtung umfasst einen bolzenförmigen Anker, ein vom Anker durchgriffenes hülsenförmiges Dämpfungselement, das eine nach außen offene Aufnahmenut aufweist, welche in eine zugeordnete Aufnahmeöffnung einer Befestigungskonsole einführbar ist, und ein vom Anker axial geführtes Spannmittel, welches durch manuelle Betätigung aus einer Grundposition in eine Zuspannposition überführbar ist, wobei das Spannmittel jeweils in seiner Grundposition und in seiner Zuspannposition mit dem Anker verrastet ist und in seiner Zuspannposition das Dämpfungselement mit einer Axialkraft beaufschlagt.

In der DE 102 45 797 A1 wird eine Vorrichtung zur elastischen Lagerung eines hydraulischen Aggregats einer Fahrzeugbremsanlage in einem Fahrzeug beschrieben. Die beschriebene Vorrichtung umfasst einen Stehbolzen mit Rasthaken, ein vom Stehbolzen durchgriffenes hülsenförmiges Dämpfungselement, das eine nach außen offene Aufnahmenut aufweist, welche in eine zugeordnete Aufnahmeöffnung einer Befestigungskonsole einführbar ist, eine vom Stehbolzen axial geführte Haltebuchse, welche auf ihrer Innenseite ebenfalls mit axial aufeinander folgenden, jedoch entgegengesetzt zu den Rasthaken des Stehbolzens ausgerichtete Rasthaken identischer Geometrie aufweist. Dadurch lässt sich die Haltebuchse mit relativ geringer und in Längsrichtung des Stehbolzens wirkender Kraft auf den Stehbolzen stecken und fixieren.

### Offenbarung der Erfindung

Die erfindungsgemäße Vorrichtung zur schwingungsdämpfenden Lagerung eines Fluidaggregats mit den Merkmalen des unabhängigen Patentanspruchs 1 hat demgegenüber den Vorteil, dass die Spannhülse und das Schraubelement mit Innengewinde als einstückiges Spannelement mit einer Anlageschulter ausgeführt sind, wobei die vom Spannelement durch die Aufschraubbewegung auf einen Gewindeschaft mit Außengewinde eines Stehbolzen erzeugte Axialkraft über die Anlageschulter auf ein elastisches Dampfungselement wirkt. Die erfindungsgemäße Vorrichtung zur schwingungsdämpfenden Lagerung eines Fahrzeugaggregats, insbesondere eines Fluidaggregats eines Fahrzeugbremssystems, in einer zugeordneten Aufnahmeöffnung umfasst somit den Stehbolzen, welcher das hülsenförmige und elastische Dämpfungselement durchgreift, und das Spannelement mit Anlageschulter, Spannhülse und Schraubelement. Das elastische Dämpfungselement dient dazu, einen direkten Kontakt zwischen einem Halter und den steifen Teilen der Vorrichtung zur schwingungsdämpfenden Lagerung eines Fluidaggregats zu vermeiden. Hierzu weist das elastische Dämpfungselement eine nach außen offene Aufnahmenut auf, welche in die zugeordnete Aufnahmeöffnung eingeführt ist. Zudem weist der Stehbolzen einen Verbindungszapfen auf, über welchen die Vorrichtung mit dem Fahrzeugaggregat verbunden werden kann. Durch den Gewindeschaft mit Außengewinde kann das Spannelement durch das Schraubelement mit Innengewinde auf den Stehbolzen so aufgeschraubt werden, dass das Spannelement mit der Anlageschulter und der Spannhülse axial auf dem Stehbolzen gegen das Dampfungselement bewegt wird, um das elastische Dämpfungselement in einen gespannten Zustand zu bringen, in welchem es sowohl radial aufgeweitet als auch axial verkürzt ist. Ausführungsformen der erfindungsgemäßen Vorrichtung zur schwingungsdämpfenden Lagerung eines Fluidaggregats ermöglichen in vorteilhafter Weise eine Redzierung der Bauteileanzahl sowie eine Reduzierung des erforderlichen Montageraums, da das Spannelement kompakter und somit kürzer ausgeführt werden kann.

Ein Fahrzeugaggregat, insbesondere Fluidaggregat eines Fahrzeugbremssystems, mit den Merkmalen des unabhängigen Patentanspruchs 10 weist den Vorteil auf, dass es über mindestens eine erfindungsgemäße Vorrichtung schwingungsfrei in einer korrespondierenden Aufnahmeöffnung einer fahrzeugseitig befestigten Konsole gehalten ist, wobei die mindestens eine erfindungsgemäße Vorrichtung über eine Aufnahmebohrung mit einem Gehäuse des Fahrzeugaggregats verbunden ist. Durch Ausführungsformen der mindestens einen erfindungsgemäßen Vorrichtung zur schwingungsdämpfenden Lagerung eines Fluidaggregats wird die nach außen offene Aufnahmenut des Dämpfungselements in die korrespondierende Aufnahmeöffnung der Befestigungskonsole eingepresst, wodurch die Position des Fahrzeugaggregats in der Ausgangslage definiert ist. Durch Anziehen des Spannelement mit Anlageschulter, Spannhülse und Schraubelement wird das Dämpfungselement axial komprimiert und radial aufgeweitet, um einen Formschluss zu erzeugen, wodurch das Fahrzeugaggregat gesichert ist.

Ausführungsformen der Erfindung ermöglichen durch die schwingungsdämpfende Lagerung des Fahrzeugaggregats in vorteilhafter Weise eine Unterdrückung bzw. Dämpfung einer Schwingungsübertragung vom Aggregat auf die Karosserie des Fahrzeugs. Diese Schwingungen können beispielsweise von einem Elektromotor hervorgerufen werden, der zur Betätigung von Pumpen am Aggregat vorgesehen ist. Durch den Pumpenbetrieb kann bei der Verwendung in einem hydraulischen Bremssystem beispielsweise ein Bremsdruck an den Radbremsen moduliert werden. Durch die schwingungsdämpfende Lagerung können die dabei entstehenden mechanischen und/oder hydraulischen Schwingungen gedämpft und eine störende Wahrnehmung von den Fahrzeuginsassen vermieden werden.

Durch die in den abhängigen Ansprüchen aufgeführten Maßnahmen und Weiterbildungen sind vorteilhafte Verbesserungen der im unabhängigen Patentanspruch 1 angegebenen Vorrichtung zur schwingungsdämpfenden Lagerung eines Fluidaggregats und des im unabhängigen Patentanspruch 10 angegebenen Fluidaggregats möglich.

Besonders vorteilhaft ist, dass zwischen der Anlageschulter und dem Dampfungselement eine Scheibe angeordnet ist, die so ausgeführt ist, dass die Reibung zwischen dem elastischen Dampfungselement und der Scheibe höher als die Reibung zwischen der Scheibe und der Anlageschulter ist. Die Scheibe hat die Funktionen, das elastische Dämpfungselement beim Aufschrauben des Spannelements axial zu komprimieren und gleichzeitig zu verhindern, dass die Scheibe bei der Anlage am elastischen Dämpfungselement mitdreht. Eine solche einfach aufgebaute Scheibe ist in vorteilhafter Weise als Massengut einfach und kostengünstig herstellbar. Eine Möglichkeit eine niedrige Reibung zwischen der Scheibe und der Anlageschulter zu realisieren besteht beispielsweise darin, an der Anlageschulter einen Hinterstich so auszubilden, dass eine definierte ringförmige Anlage an der Scheibe vorhanden ist.

In Ausgestaltung der erfindungsgemäßen Vorrichtung teilt die nach außen offene Aufnahmenut das Dampfungselement in zwei asymmetrische Abschnitte mit unterschiedlichen axialen Längen auf, wobei der längere Abschnitt dem Fahrzeugaggregat zugewandt ist. Durch die asymmetrische Gestaltung des Dämpfungselements wird der Verschiebeweg des Fahrzeugaggregats von einer Ausgangsposition zur Befestigungsposition in vorteilhafter Weise reduziert. Dadurch kann der durch das Fluidaggregat beanspruchte Bauraum in vorteilhafter Weise reduziert werden.

In weiterer Ausgestaltung der erfindungsgemäßen Vorrichtung ist das einstückige Spannelement so ausgeführt, dass die Anlageschulter erst dann auf das Dampfungselement wirkt, wenn die Spannhülse unter der nach außen offenen Aufnahmenut durchgetaucht ist. Das elastische Dämpfungselement verformt sich beim Einsetzen in die Aufnahmeöffnung der Befestigungskonsole im Bereich der nach außen offenen Aufnahmenut aufgrund der unterschiedlichen Teileabmessungen nach innen. Bei herkömmlichen Ausführungsformen kann sich zwischen dem Schraubelement und einer Anschlagschulter des Stehbolzens ein Spalt ausbilden, der genau unterhalb dieser Aufnahmenut liegt und in den deshalb das elastische Dämpfungselement eingeklemmt und abgequetscht werden kann. Zudem kann das elastische Material im Spalt dazu führen, dass das Drehmoment im Schraubverband unter Einsatzbedingungen nachlässt. Die erfindungsgemäße Ausführungsform verhindert in vorteilhafter Weise eine zu starke Ausdehnung des elastischen Dämpfungselements nach innen, da sich der Spalt und der verformte Abschnitt des Dämpfungselements an unterschiedlichen Axialpositionen befinden, so dass das unerwünschte Einklemmen und Abquetschen des Dämpfungselement während dem Aufschraubvorgang in vorteilhafter Weise verhindert werden können.

In weiterer Ausgestaltung der erfindungsgemäßen Vorrichtung ist zwischen dem Verbindungszapfen und dem Gewindeschaft ein durchmessergrößerer erster Ringbund am Stehbolzen ausgebildet, dessen eine Stirnseite eine Auflageschulter darstellt, mit welcher sich die Vorrichtung im eingebauten Zustand am Gehäuse des Aggregats abstützt. Des Weiteren kann die andere Stirnseite des ersten Ringbunds eine Anschlagschulter für die Stirnseite der Spannhülse darstellen. Der erste Ringbund stellt somit in vorteilhafter Weise eine Auflagefläche zur Vorgabe einer optimalen Einbautiefe des Stehbolzens und eine Anschlagfläche für das Spannelement zur Verfügung.

In weiterer Ausgestaltung der erfindungsgemäßen Vorrichtung ist zwischen der Auflageschulter und der Anlageschulter ein durchmessergrößerer zweiter Ringbund am Stehbolzen ausgebildet, welcher mit einer nach innen offenen Aufnahmenut des elastische Dampfungselements so zusammenwirkt, dass das elastische Dampfungselement nach dem Aufschieben auf den Stehbolzen während der Vormontage in einer definierten Position gehalten wird, so dass in vorteilhafter Weise auf weitere Elemente zur Verliersicherung verzichtet werden kann.

In weiterer Ausgestaltung der erfindungsgemäßen Vorrichtung ist mindestens ein Bereich des Außengewindes am Gewindeschaft so ausgeführt, dass sich an diesem mindestens einen Bereich eine erhöhte Klemmung zwischen dem aufgeschraubten Schraubelement und dem Gewindeschaft ergibt. An dem mindestens einen Bereich kann das Außengewinde auf dem Gewindeschaft beispielsweise eine veränderte Steigung aufweisen, um die erhöhte Klemmwirkung zu erzielen. Ein erster Bereich mit erhöhter Klemmwirkung kann beispielsweise so am Gewindeschaft positioniert werden, dass ein vorgespannter Zustand des Dämpfungselements durch die erhöhte Klemmwirkung angezeigt ist und das Schraubelement so weit auf den Gewindeschaft aufgeschraubt ist, dass das Innengewinde des Schraubelements vollständig vom Außengewinde des Stehbolzens überdeckt ist und eine offene Stirnseite des Gewindeschaftes über das Schraubelement übersteht. Dadurch können in vorteilhafter Weise Beschädigungen der Vorrichtung beim Verbinden des Verbindungszapfens mit dem Fahrzeugaggregat vermieden werden. Zudem kann durch das Erreichen des Bereichs mit erhöhter Klemmwirkung der vorgespannte Zustands des Dämpfungselements so umgesetzt werden, dass der Hohlraum ausgebildet ist, in welchen das Dämpfungselement ausweichen kann, wenn das Dämpfungselement über die nach außen offene Aufnahmenut in die korrespondierende Aufnahmeöffnung eingeführt wird. Des Weiteren kann durch die erhöhte Klemmung eine Verliersicherung des Spannelements beispielsweise beim Transport der Vorrichtung umgesetzt werden. Ein zweiter Bereich mit erhöhter Klemmwirkung kann beispielsweise so am Gewindeschaft positioniert werden, dass ein gespannter Zustand des Dämpfungselements durch die erhöhte Klemmwirkung angezeigt ist und das Schraubelement so weit auf den Gewindeschaft aufgeschraubt ist, dass die Stirnseite der Spannhülse an der Anlageschulter anliegt.

In Ausgestaltung des erfindungsgemäßen Fahrzeugaggregats kann der Verbindungszapfen des Stehbolzens der mindestens einen Vorrichtung in mindestens eine Aufnahmebohrung des Gehäuses des Fahrzeugaggregats eingepresst oder eingeschraubt oder verstemmt werden.

Vorteilhafte Ausführungsformen der Erfindung sind in den Zeichnungen dargestellt und werden nachfolgend beschrieben. In den Zeichnungen bezeichnen gleiche Bezugszeichen Komponenten bzw. Elemente, die gleiche bzw. analoge Funktionen ausführen.

### Kurze Beschreibung der Zeichnungen

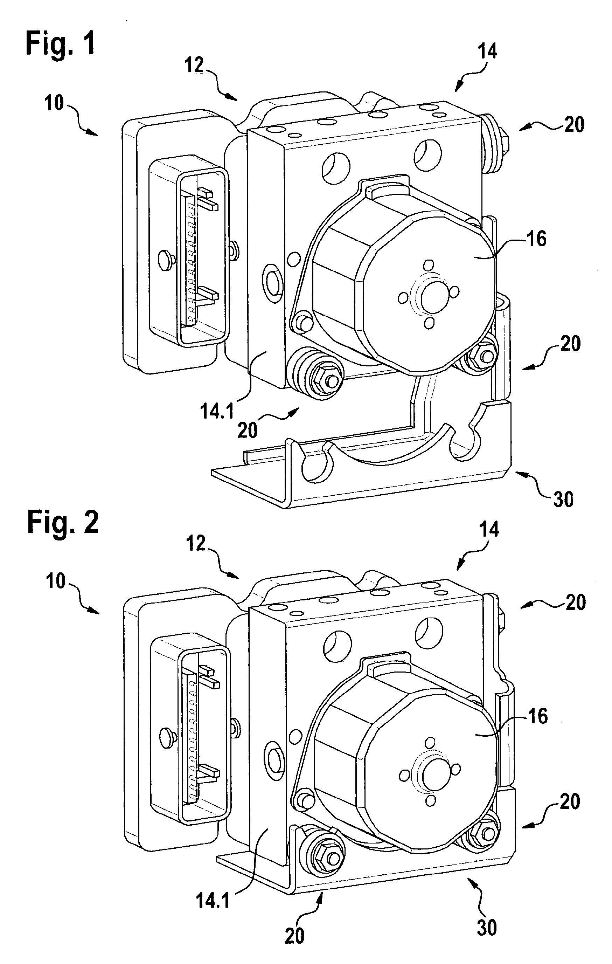

Fig. 1 zeigt eine schematische Perspektivdarstellung eines Fluidaggregats mit einem Ausführungsbeispiel einer erfindungsgemäßen Vorrichtung zur schwingungsdämpfenden Lagerung eines Fluidaggregats und einem Ausführungsbeispiel einer korrespondierenden Befestigungskonsole vor der Verbindung mit dem Fluidaggregat.
Fig. 2 zeigt eine schematische Perspektivdarstellung des Fluidaggregats mit dem Ausführungsbeispiel der erfindungsgemäßen Vorrichtung zur schwingungsdämpfenden Lagerung eines Fluidaggregats und dem Ausführungsbeispiel der korrespondierenden Befestigungskonsole nach der Verbindung mit dem Fluidaggregat.

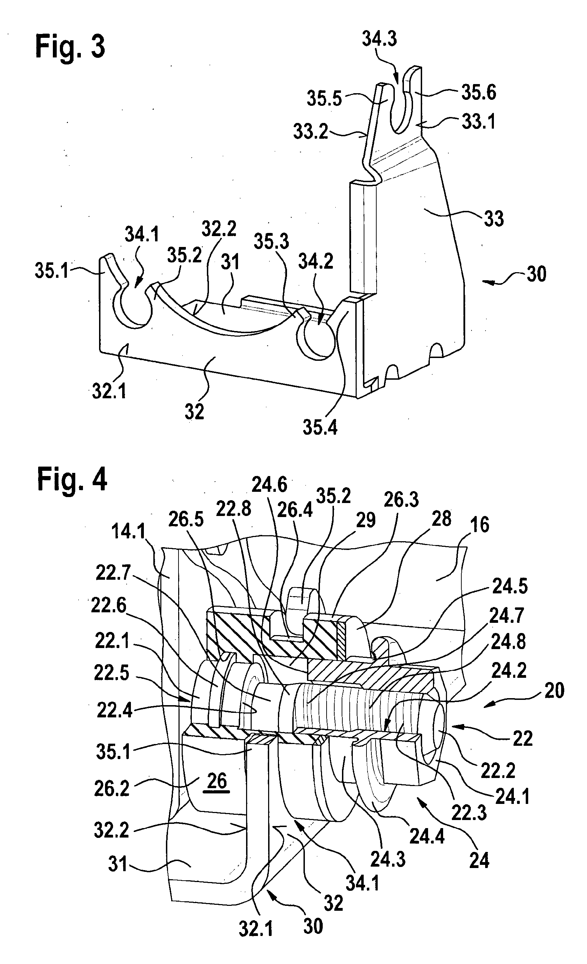

Fig. 3 zeigt eine schematische Perspektivdarstellung eines Ausführungsbeispiels einer Befestigungskonsole für das in Fig. 1 bzw. 2 dargestellte Fluidaggregat .
Fig. 4 zeigt eine schematische Detaildarstellung einer Lageranordnung in einer teilweise aufgeschnittenen Perspektivansicht mit einem Ausführungsbeispiel einer erfindungsgemäßen Vorrichtung zur schwingungsdämpfenden Lagerung eines Fluidaggregats aus Fig. 1 bzw. 2 in der Befestigungskonsole aus Fig. 3 in einem vorgespannten Zustand.

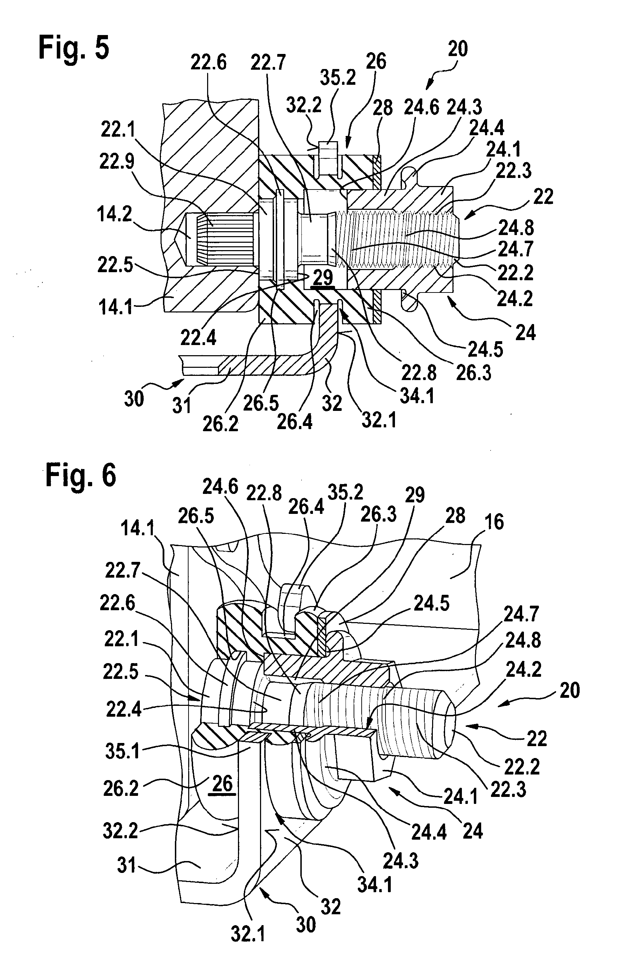

Fig. 5 zeigt eine schematische Schnittdarstellung der Lageranordnung aus Fig. 4 mit dem Ausführungsbeispiel der erfindungsgemäßen Vorrichtung zur schwingungsdämpfenden Lagerung eines Fluidaggregats im vorgespannten Zustand.
Fig. 6 zeigt eine schematische Detaildarstellung der Lageranordnung aus Fig. 4 bzw. 5 in einer teilweise aufgeschnittenen Perspektivansicht mit dem Ausführungsbeispiel der erfindungsgemäßen Vorrichtung zur schwingungsdämpfenden Lagerung eines Fluidaggregats aus Fig. 1 bzw. 2 in der Befestigungskonsole aus Fig. 3 in einem gespannten Zustand.

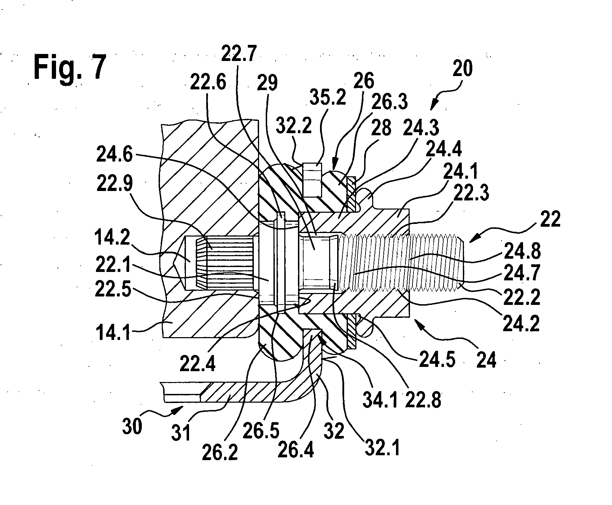

Fig. 7 zeigt eine schematische Schnittdarstellung der Lageranordnung aus Fig. 6 mit dem Ausführungsbeispiel der erfindungsgemäßen Vorrichtung zur schwingungsdämpfenden Lagerung eines Fluidaggregats im gespannten Zustand.

### Ausführungsformen der Erfindung

Wie aus Fig. 1 und 2 ersichtlich ist umfasst ein Fluidaggregat 10, das beispielsweise in einem Antiblockiersystem (ABS) oder einem Antriebsschlupfregelsystem (ASR-System) oder einem elektronischen Stabilitätsprogrammsystem (ESP-System) eingesetzt wird, in der Regel eine Elektronikbaugruppe 12 bzw. Steuergerät und einen Fluidbereich, der eine Fluidbaugruppe 14 mit nicht dargestellten Fluidkomponenten, wie beispielsweise Fluidstellelemente, Fluidkanäle, Pumpen usw., sowie ein Gehäuse 14.1 und einen elektrischen Pumpenmotor 16 umfasst. Derartige Fluidaggregate 10 sind von geregelten Fahrzeugbremsanlagen in ihrem Aufbau hinlänglich bekannt und müssen daher nicht weiter im Detail beschrieben werden. Das Fluidaggregat 10 dient beispielsweise zur Modulation des Bremsdrucks in angeschlossenen nicht dargestellten Radbremsen unter Berücksichtigung des Bremswunsches des Fahrers und der Schlupfverhältnisse an den Rädern des Fahrzeugs.

Das Fluidaggregat 10 kann über mindestens eine erfindungsgemäße Vorrichtung 20 schwingungsgedämpft an einer Konsole 30 gelagert werden, die fest an einer nicht dargestellten Karosserie des Fahrzeugs verankert ist. Im dargestellten Ausführungsbeispiel werden drei Vorrichtungen 20 zur schwingungsdämpfenden Lagerung des Fahrzeugaggregats 10 an der Konsole 30 verwendet. Wie aus Fig. 1 bis 3 ersichtlich ist, weist die Konsole 30 eine Grundplatte 31, einen mit der Grundplatte 31 verbundenen ersten waagerecht ausgerichteten Schenkel 32 und einen senkrecht dazu verlaufenden mit der Grundplatte 31 verbundenen zweiten Schenkel 33 auf. Der erste Schenkel 32 weist zwei zu einer ersten Raumrichtung hin ausgerichtete Aufnahmeöffnungen 34.1 und 34.2 und der zweite Schenkel 33 weist eine dritte zu einer zweiten Raumrichtung hin ausgerichtete Aufnahmeöffnung 34.3 auf. Die Aufnahmeöffnungen 34.1, 34.2, 34.3 sind als schalenförmige zu einer Montagerichtung offene Ausrundungen mit seitlich davon angeordneten die Aufnahmeöffnungen 34.1, 34.2, 34.3 verengenden Klauen 35.1, 35.2, 35.3, 35.4, 35.5, 35.6 ausgeführt. Am Aggregategehäuse 14.1 sind die drei Vorrichtungen 20 zur schwingungsdämpfenden Lagerung des Fahrzeugaggregats 10 befestigt, die im eingehängten Zustand in den jeweils zugeordneten Aufnahmeöffnungen 34.1, 34.2, 34.3 eingelegt sind. Im Bereich der Aufnahmeöffnungen 34.1, 34.2, 34.3 können die korrespondierenden Seitenflächen 32.1, 32.2 bzw. 33.1, 33.2 der beiden Aufnahmeschenkel 32, 33 mit nicht dargestellten Prägungen versehen sein, um die Haftreibung zwischen den Vorrichtungen 20 zur schwingungsdämpfenden Lagerung des Fahrzeugaggregats 10 und der Konsole 30 zu erhöhen. Alternativ zum dargestellten Ausführungsbeispiel kann die Konsole 30 gemäß weiteren nicht dargestellten Ausführungsformen nur einen Schenkel mit mindestens einer Aufnahmeöffnung oder drei Schenkel mit mindestens einer Aufnahmeöffnung umfassen.

Nachfolgend wird unter Bezugnahme auf Fig. 1 bis 4 eine beispielhafte Ausführungsform der erfindungsgemäßen Vorrichtung 20 zur schwingungsdämpfenden Lagerung des Fahrzeugaggregats 10 beschrieben, welche in eine erste Aufnahmeöffnung 34.1 des ersten Aufnahmeschenkels 32 eingelegt ist. Hierbei zeigen Fig. 4 und 5 die eingelegte Vorrichtung 20 in einem vorgespannten Zustand, und Fig. 6 und 7 zeigen die eingelegte Vorrichtung 20 in einem gespannten Zustand.

Wie aus Fig. 1 bis 4 ersichtlich ist, umfasst die Vorrichtung 20 einen Stehbolzen 22, ein vom Stehbolzen 22 durchgriffenes hülsenförmiges und elastisches Dämpfungselement 26, das eine nach außen offene Aufnahmenut 26.4 aufweist, welche in die zugeordnete Aufnahmeöffnung 34.1, 34.2, 34.3, hier die Aufnahmeöffnung 34.1 eingeführt ist, ein vom Stehbolzen 22 geführtes einstückiges Spannelement 24, das erfindungsgemäß ein Schraubelement 24.1 mit einem Innengewinde 24.2, eine Spannhülse 24.3 und eine Anlageschulter 24.4 umfasst. Der Stehbolzen 22 umfasst an einem Ende einen Verbindungszapfen 22.9, der längs geriffelt ist und unverdrehbar in einer Aufnahmebohrung 14.2 des Gehäuses 14.1 des Fluidaggregats 10 aufgenommen ist. Hierzu kann der Verbindungszapfen 22.9 des Stehbolzens 22 in die korrespondierende Aufnahmebohrung 14.2 des Gehäuses 14.1 des Fahrzeugaggregats 10 eingepresst oder eingeschraubt oder verstemmt werden. Hinter dem Verbindungszapfen 22.9 ist ein durchmessergrößerer erster Ringbund 22.1 am Stehbolzen 22 ausgebildet, dessen eine Stirnseite eine Auflageschulter 22.5 darstellt, mit welcher sich die Vorrichtung 20 im eingebauten Zustand am Gehäuse 14.1 des Fluidaggregats 10 abstützt. Die andere Stirnseite des ersten Ringbunds 22.1 stellt eine Anschlagschulter 22.4 für die Spannhülse 24.3 dar. Zwischen der Auflageschulter 22.5 und der Anlageschulter 24.4 des ersten Ringbunds 22.1 ist ein durchmessergrößerer zweiter Ringbund 22.6 am Stehbolzen 22 ausgebildet, welcher mit einer nach innen offenen Aufnahmenut 26.5 des elastischen Dampfungselements 26 so zusammenwirkt, dass das elastische Dampfungselement 26 nach dem Aufschieben auf den Stehbolzen 22 in einer definierten Position gehalten ist. Am anderen Ende weist der Stehbolzen 22 einen Gewindeschaft 22.2 mit einem Außengewinde 22.3 auf, auf welchen das Schraubelement 24.1 des Spannelements 24 aufgeschraubt ist. Im dargestellten Ausführungsbeispiel sind zwei Bereiche 24.7, 24.8 des Außengewindes 22.3 am Gewindeschaft 22.2 so ausgeführt, dass sich an diesen Bereichen 24.7, 24.8 eine erhöhte Klemmung zwischen dem aufgeschraubten Schraubelement 24.1 und dem Gewindeschaft 22.2 ergibt. So kann sich auf dem Außengewinde 22.3 beispielsweise eine Körnung befinden. Im dargestellten Ausführungsbeispiel wird jedoch an den beiden Bereichen 24.7, 24.8 die Steigung des Außengewindes 22.3 auf dem Gewindeschaft 22.2 verändert, um die erhöhte Klemmwirkung zu erzielen. Ein erster Bereich 24.8 mit erhöhter Klemmwirkung ist so am Gewindeschaft 22.2 positioniert, dass der vorgespannte Zustand des Dämpfungselements 26 durch die erhöhte Klemmwirkung angezeigt wird und das Schraubelement 24.1 so weit auf den Gewindeschaft 22.2 aufgeschraubt ist, dass das Innengewinde 24.2 des Schraubelements 24.1 vollständig vom Außengewinde 22.3 des Stehbolzens 22.2 überdeckt ist und eine offene Stirnseite des Gewindeschaftes 22.2 über das Schraubelement 24.1 übersteht. Dadurch können in vorteilhafter Weise Beschädigungen der Vorrichtung beim Verbinden des Verbindungszapfens mit dem Fahrzeugaggregat vermieden werden: Zudem kann durch das Erreichen des ersten Bereichs 24.8 mit erhöhter Klemmwirkung der vorgespannte Zustands des Dämpfungselements 26 so umgesetzt werden, dass ein Hohlraum 29 ausgebildet ist, in welchen das Dämpfungselement 26 ausweichen kann, wenn das Dämpfungselement 26 über die nach außen offene Aufnahmenut 26.4 in die korrespondierende Aufnahmeöffnung 34.1 eingeführt wird. Des Weiteren kann durch die erhöhte Klemmung eine Verliersicherung des Spannelements 24 umgesetzt werden, da das Schraubelement 24.1 und somit das Spannelement 24 beispielsweise während des Transports in seiner Position stehen bleibt. Ein zweiter Bereich 24.7 mit erhöhter Klemmwirkung kann beispielsweise so am Gewindeschaft 22.2 positioniert werden, dass der gespannte Zustand des Dämpfungselements 26 durch die erhöhte Klemmwirkung angezeigt ist und das Schraubelement 24.1 so weit auf den Gewindeschaft 22.2 aufgeschraubt ist, dass die Stirnseite 24.6 der Spannhülse 24.3 an der Anlageschulter 22.4 des ersten Ringbunds 22.1 anliegt.

Zwischen dem ersten Ringbund 22.1 und dem Gewindeschaft 22.2 ist der Durchmesser des Stehbolzens 22 in einem Zwischenbereich 22.7 verjüngt, so dass zwischen dem Stehbolzen 22 und dem Dämpfungselement 26 der Hohlraum 29 entsteht, welcher von der Spannhülse 24.3 des Spannelements 24 überdeckt ist, wenn das Spannelement 24 bis zum Anschlag an der Anlageschulter 24.4 auf den Gewindeschaft 22.2 des Stehbolzens 22 aufgeschraubt ist. Durch eine Übergangsschräge 22.8 wird der kleiner Außendurchmesser des Stehbolzens 22 im Zwischenbereich 22.7 auf den größeren Außendurchmesser im Bereich des Außengewindes 22.3 vergrößert. Die nach außen offene Aufnahmenut 26.4 teilt das elastische Dampfungselement 26 in zwei asymmetrische Abschnitte 26.2, 26.3 mit unterschiedlichen axialen Längen auf, wobei der längere Endabschnitt 26.2 dem Fahrzeugaggregat 10 und der kürzere Endabschnitt 26.3 dem Spannelement 24 zugewandt sind. Das elastische Dämpfungselement 26 ist im dargestellten Zustand ungespannt auf dem Stehbolzen 22 aufgenommen und umschließt mit seinem längeren Endabschnitt 26.2 den in seinen Innenquerschnitt passend eingreifenden ersten Ringbund 22.1 sowie mit der nach innen offenen Aufnahmenut den zweiten Ringbund 22.6. Der Außendurchmesser des auf den Stehbolzen 22 aufgeschraubten Spannelements 24 weist im Bereich der Spannhülse 24.3 den gleichen Durchmesser wie der zweite Ringbund 22.6 auf und durchgreift passend den kürzeren Endabschnitt 26.3 des elastischen Dämpfungselements 26.

Wie aus Fig. 1 bis 4 weiter ersichtlich ist, ist zwischen der Anlageschulter 24.4 des Spannelements 24 und dem elastischen Dampfungselement 26 eine Scheibe 28 angeordnet, deren Außendurchmesser an den Außendurchmesser des elastischen Dämpfungselements 26 angepasst ist, und deren Innendurchmesser an den Außendurchmesser der Spannhülse 24.3 angepasst ist. Die Scheibe 28 ist so ausgeführt, dass die Reibung zwischen dem elastischen Dampfungselement 26 und der Scheibe 28 höher als die Reibung zwischen der Scheibe 28 und der Anlageschulter 24.4 ist. Daher ist an der Anlageschulter 24.4 ein Hinterstich 24.5 so ausgebildet, dass eine definierte ringförmige Anlage der Anlageschulter 24.4 an der Scheibe 28 vorhanden ist. Durch die Scheibe 28 wird in vorteilhafter Weise vermieden, dass das elastische Dämpfungselement 26 bei der Aufschraubbewegung des Spannelements 24 mitdreht.

In dem in Fig. 4 und 5 dargestellten vorgespannten Zustand des Dämpfungselements 26, ist das Spannelement 24 so weit auf den Gewindeschaft 22.2 des Stehbolzens 22 aufgeschraubt, dass die Spannhülse 24.3 den kleineren Endabschnitt 26.3 des elastischen Dämpfungselements 26 im Wesentlichen vollständig durchgreift. Im vorgespannten Zustand des Dämpfungselements 26 wird das Fluidaggregat 10 so in die Befestigungskonsole 30 eingehängt, dass jeweils eine erfindungsgemäße Vorrichtung 20 zur schwingungsdämpfenden Lagerung des Fahrzeugaggregats 10 über die nach außen offene Aufnahmenut 26.4 des korrespondierenden elastischen Dämpfungselements 26 in eine korrespondierende Aufnahmeöffnung 34.1, 34.2, 34.3 der Befestigungskonsole 30 eingepresst wird. Bei diesem Vorgang kann das elastische Dämpfungselement 26 in den Hohlraum 29 zwischen dem ersten Ringbund 22.1 und dem teilweise aufgeschraubten Spannelement 24 ausweichen. Ausgehend von diesem in Fig. 4 und 5 dargestellten eingelegten und vorgespannten Zustand des Dämpfungselements 26 kann das Spannelement 24 weiter aufgeschraubt und axial auf dem Stehbolzen 22 so gegen das elastische Dampfungselement 26 bewegt werden, dass das elastische Dampfungselement 26 in einen in Fig. 6 und 7 dargestellten gespannten Zustand überführt wird. Der Schraubvorgang wird durch das Anschlagen der Stirnseite 24.6 der Spannhülse 24.3 an der Anlageschulter 24.4 des ersten Ringbunds 22.1 abgeschlossen.

Wie aus Fig. 6 und 7 ersichtlich ist, ist das elastische Dämpfungselement 26 im gespannten Zustand sowohl radial aufgeweitet als auch axial verkürzt und die offene Stirnseite 24.6 der Spannhülse 24.3 liegt an der Anlageschulter 24.4 des ersten Ringbunds 22.1 an. Durch die radiale Aufweitung und die axiale Verkürzung wird zwischen dem Dämpfungselement 26 und dem Bereich der Seitenflächen 32.1, 32.2 des korrespondierenden Schenkels 32, der um die Aufnahmeöffnung 34.1 angeordnet ist, ein Formschluss erzeugt, wodurch das Fluidaggregat 10 schwingungsgedämpft in der Befestigungskonsole 30 gelagert ist. In diesem gespannte Zustand wird der Hohlraum 29 von der Spannhülse 24.3 überdeckt und das elastische Dämpfungselement 26 ist so verformt, dass die von den Klauen 35.1, 35.2 der Aufnahmeöffnung 34.1 teilweise umgriffene nach außen offene Aufnahmenut 26.4 mit radialer Pressung innen an der Aufnahmeöffnung 34.1 angreift. Die beiden Endabschnitte 26.2 und 26.3 des elastischen Dämpfungselements 26 greifen dagegen mit axialer Pressung an den beiden Seitenflächen 32.1, 32.2 des ersten Schenkels 32 an. Durch das axiale Verspannen des elastischen Dämpfungselements 26 wird somit eine kraft- und formschlüssige Verbindung mit dem ersten Schenkel 31 der Konsole 30 erzielt, wobei die nicht dargestellte Prägung der Seitenflächen 32.1, 32.2 im Bereich der Aufnahmeöffnung 34.1 unterstützend wirkt. Zudem verschiebt sich das Fluidaggregat 10 aufgrund der axialen Verkürzung in Richtung des zugehörigen Seitenschenkels 32. Hierbei ist das einstückige Spannelement 24 so ausgeführt, dass die Anlageschulter 24.4 erst dann über die Scheibe 28 auf das elastische Dampfungselement 26 wirkt, wenn die Spannhülse 24.3 unter der nach außen offenen Aufnahmenut 26.4 durchgetaucht ist, so dass ein Einklemmen und Abquetschen des elastischen Dämpfungselements 26 in vorteilhafter Weise vermieden werden kann.

Ausführungsformen der Erfindung ermöglichen in vorteilhafter Weise eine Reduzierung des Montageraums, da sich das Fluidaggregat beim Anziehen weniger verschiebt. Zudem verhindern Ausführungsformen der Erfindung in vorteilhafter Weise, dass das elastische Dämpfungselement eingeklemmt und abgequetscht werden kann sowie das Anzugsmoment im Schraubverband unter Einsatzbedingungen nachlassen kann.

## Patentansprüche

1. Vorrichtung zur schwingungsdämpfenden Lagerung eines Fahrzeugaggregats, insbesondere eines Fluidaggregats eines Fahrzeugbremssystems, in einer zugeordneten Aufnahmeöffnung (34.1, 34.2, 34.3), mit einem Stehbolzen (22), einem vom Stehbolzen (22) durchgriffenen hülsenförmigen und elastischen Dämpfungselement (26), das eine nach außen offene Aufnahmenut (26.4) aufweist, welche in die zugeordnete Aufnahmeöffnung (34.1, 34.2, 34.3) einführbar ist, einer vom Stehbolzen (22) zwischen Stehbolzen (22) und Dämpfungselement (26) geführten Spannhülse (24.3) und einem Schraubelement (24.1) mit einem Innengewinde (24.2), wobei der Stehbolzen (22) einen Verbindungszapfen (22.9), über welchen die Vorrichtung (20) mit dem Aggregat (10) verbindbar ist, und einen Gewindeschaft (22.2) mit einem Außengewinde (22.3) aufweist, auf welchen das Schraubelement (22.1) aufschraubbar ist, um die Spannhülse (24.3) axial auf dem Stehbolzen (22) so gegen das elastische Dampfungselement (26) zu bewegen, dass das elastische Dampfungselement (26) in einem gespannten Zustand sowohl radial aufgeweitet als auch axial verkürzt ist, **dadurch gekennzeichnet, dass** die Spannhülse (24.3) und das Schraubelement (24.1) als einstückiges Spannelement (24) mit einer Anlageschulter (24.4) ausgeführt sind, wobei die vom Spannelement (24) durch die Aufschraubbewegung erzeugte Axialkraft über die Anlageschulter (24.4) auf das elastische Dampfungselement (26) wirkt.

2. Vorrichtung nach Anspruch 1, **dadurch gekennzeichnet, dass** zwischen der Anlageschulter (24.4) und dem elastische Dampfungselement (26) eine Scheibe (28) angeordnet ist, die so ausgeführt ist, dass die Reibung zwischen dem elastischen Dampfungselement (26) und der Scheibe (28) höher als die Reibung zwischen der Scheibe (28) und der Anlageschulter (24.4) ist.

3. Vorrichtung nach Anspruch 2, **dadurch gekennzeichnet, dass** an der Anlageschulter (24.4) ein Hinterstich (24.5) so ausgebildet ist, dass eine definierte ringförmige Anlage an der Scheibe (28) vorhanden ist.

4. Vorrichtung nach einem der Ansprüche 1 bis 3, **dadurch gekennzeichnet, dass** die nach außen offene Aufnahmenut (26.4) das elastische Dampfungselement (26) in zwei asymmetrische Abschnitte mit unterschiedlichen axialen Längen aufteilt, wobei der längere Abschnitt (26.2) dem Fahrzeugaggregat (10) zugewandt ist.

5. Vorrichtung nach einem der Ansprüche 1 bis 4, **dadurch gekennzeichnet, dass** das einstückige Spannelement (24) so ausgeführt ist, dass die Anlageschulter (24.4) erst dann auf das elastische Dampfungselement (26) wirkt, wenn die Spannhülse (24.3) unter der nach außen offenen Aufnahmenut (26.4) durchgetaucht ist.

6. Vorrichtung nach einem der Ansprüche 1 bis 5, **dadurch gekennzeichnet, dass** zwischen dem Verbindungszapfen (22.9) und dem Gewindeschaft (22.2) ein durchmessergrößerer erster Ringbund (22.1) am Stehbolzen (22) ausgebildet ist, dessen eine Stirnseite eine Auflageschulter (22.5) darstellt, mit welcher sich die Vorrichtung (20) im eingebauten Zustand am Gehäuse (14.1) des Aggregats abstützt.

7. Vorrichtung nach Anspruch 6, **dadurch gekennzeichnet, dass** die andere Stirnseite des ersten Ringbunds (22.1) eine Anschlagschulter (22.4) für eine offene Stirnseite (24.6) der Spannhülse (24.3) darstellt.

8. Vorrichtung nach Anspruche 6 oder 7, **dadurch gekennzeichnet, dass** zwischen der Auflageschulter (22.5) und der Anlageschulter (24.4) ein durchmessergrößerer zweiter Ringbund (22.6) am Stehbolzen (22) ausgebildet ist, welcher mit einer nach innen offenen Aufnahmenut (26.5) des elastischen Dampfungselements (26) so zusammenwirkt, dass das elastische Dampfungselement (26) nach dem Aufschieben auf den Stehbolzen (22) in einer definierten Position gehalten ist.

9. Vorrichtung nach einem der Ansprüche 1 bis 8, **dadurch gekennzeichnet, dass** mindestens ein Bereich (24.7. 24.8) des Außengewindes (22.3) am Gewindeschaft (22.2) so ausgeführt ist, dass sich an diesem mindestens einen Bereich eine erhöhte Klemmung zwischen dem aufgeschraubten Schraubelement (24.1) und dem Gewindeschaft (22.2) ergibt.

10. Fahrzeugaggregat, insbesondere Fluidaggregat eines Fahrzeugbremssystems, das über mindestens eine Vorrichtung (20), welche über eine korrespondierende Aufnahmebohrung (14.2) mit einem Gehäuse (14.1) des Fahrzeugaggregats verbunden ist, in einer fahrzeugseitig befestigten Konsole (30) gehalten ist, die mindestens eine der mindestens einen Vorrichtung (20) zugeordnete Aufnahmeöffnung (34.1, 34.2, 34.2) aufweist, **dadurch gekennzeichnet, dass** die mindestens eine Vorrichtungen (20) nach einem der Ansprüche 1 bis 9 ausgebildet ist.

11. Fahrzeugaggregat nach Anspruch 10, **dadurch gekennzeichnet, dass** der Verbindungszapfen (22.9) des Stehbolzens (22) der mindestens einen Vorrichtung (20) in mindestens eine Aufnahmebohrung (14.2) des Gehäuses (14.1) des Fahrzeugaggregats (10) eingepresst oder eingeschraubt oder verstemmt ist.

## Claims

1. Device for vibration-damping mounting of a vehicle assembly, in particular a fluid assembly of a vehicle brake system, in an associated receiving opening (34.1, 34.2, 34.3), having a stay bolt (22), a sleeve-shaped and elastic damping element (26) which is engaged through by the stay bolt (22) and has a receiving groove (26.4) which is open to the outside and can be inserted into the associated receiving opening (34.1, 34.2, 34.3), having a clamping sleeve (24.3) which is guided between the stay bolt (22) and the damping element (26) by the stay bolt (22), and a screw element (24.1) with an internal thread (24.2), the stay bolt (22) having a connecting journal (22.9), via which the device (20) can be connected to the assembly (10), and a threaded shank (22.2) with an external thread (22.3), onto which threaded shank (22.2) the screw element (22.1) can be screwed, in order to move the clamping sleeve (24.3) axially on the stay bolt (22) against the elastic damping element (26) in such a way that, in a clamped state, the elastic damping element (26) is both widened radially and shortened axially, **characterized in that** the clamping sleeve (24.3) and the screw element (24.1) are configured as a single-piece clamping element (24) with a bearing shoulder (24.4), the axial force which is generated by the clamping element (24) as a result of the screwing-on movement acting via the bearing shoulder (24.4) on the elastic damping element (26).

2. Device according to Claim 1, **characterized in that** a disk (28) is arranged between the bearing shoulder (24.4) and the elastic damping element (26), which disk (28) is configured in such a way that the friction between the elastic damping element (26) and the disk (28) is higher than the friction between the disk (28) and the bearing shoulder (24.4).

3. Device according to Claim 2, **characterized in that** an undercut (24.5) is configured on the bearing shoulder (24.4) in such a way that there is a defined annular rest on the disk (28).

4. Device according to one of Claims 1 to 3, **characterized in that** the receiving groove (26.4) which is open to the outside divides the elastic damping element (26) into two asymmetrical sections of different axial lengths, the longer section (26.2) facing the vehicle assembly (10).

5. Device according to one of Claims 1 to 4, **characterized in that** the single-piece clamping element (24) is configured in such a way that the bearing shoulder (24.4) acts on the elastic damping element (26) only when the clamping sleeve (24.3) has dipped below the receiving groove (26.4) which is open to the outside.

6. Device according to one of Claims 1 to 5, **characterized in that** a first annular collar (22.1) of greater diameter is formed on the stay bolt (22) between the connecting journal (22.9) and the threaded shank (22.2), one end side of which first annular collar (22.1) forms a supporting shoulder (22.5), by way of which the device (20) is supported on the housing (14.1) of the assembly in the installed state.

7. Device according to Claim 6, **characterized in that** the other end side of the first annular collar (22.1) forms a stop shoulder (22.4) for an open end side (24.6) of the clamping sleeve (24.3).

8. Device according to Claim 6 or 7, **characterized in that** a second annular collar (22.6) of greater diameter is formed on the stay bolt (22) between the supporting shoulder (22.5) and the bearing shoulder (24.4), which second annular collar (22.6) interacts with a receiving groove (26.5), open to the inside, of the elastic damping element (26) in such a way that the elastic damping element (26) is held in a defined position after being pushed onto the stay bolt (22).

9. Device according to one of Claims 1 to 8, **characterized in that** at least one region (24.7, 24.8) of the external thread (22.3) on the threaded shank (22.2) is configured in such a way that the result at this at least one region is an increased clamping action between the screwed-on screw element (24.1) and the threaded shank (22.2).

10. Vehicle assembly, in particular a fluid assembly of a vehicle brake system, which vehicle assembly is held via at least one device (20), which is connected via a corresponding receiving hole (14.2) to a housing (14.1) of the vehicle assembly, in a bracket (30) which is fastened on the vehicle side and has at least one receiving opening (34.1, 34.2, 34.3) which is assigned to the at least one device (20), **characterized in that** the at least one device (20) is configured according to one of Claims 1 to 9.

11. Vehicle assembly according to Claim 10, **characterized in that** the connecting journal (22.9) of the stay bolt (22) of the at least one device (20) is pressed or screwed or calked into at least one receiving hole (14.2) of the housing (14.1) of the vehicle assembly (10).

## Revendications

1. Dispositif pour le support sur palier amortissant les vibrations d'une unité de véhicule, en particulier d'une unité fluidique d'un système de freinage de véhicule, dans une ouverture de réception associée (34.1, 34.2, 34.3), comprenant un goujon fileté (22), un élément d'amortissement élastique et en forme de douille (26) traversé par le goujon fileté (22), qui présente une rainure de réception (26.4) ouverte vers l'extérieur, qui peut être introduite dans l'ouverture de réception associée (34.1, 34.2, 34.3), une douille de serrage (24.3) guidée par le goujon fileté (22) entre le goujon fileté (22) et l'élément d'amortissement (26) et un élément de vissage (24.1) avec un filetage interne (24.2), le goujon fileté (22) présentant un tourillon de connexion (22.9) par le biais duquel le dispositif (20) peut être connecté à l'unité (10), et une tige filetée (22.2) avec un filetage externe (22.3), sur laquelle l'élément de vissage (22.1) peut être vissé, afin de déplacer la douille de serrage (24.3) axialement sur le goujon fileté (22) contre l'élément d'amortissement élastique (26) de telle sorte que l'élément d'amortissement élastique (26) soit à la fois élargi radialement et raccourci axialement dans un état chargé, **caractérisé en ce que** la douille de serrage (24.3) et l'élément de vissage (24.1) sont réalisés sous forme d'élément de serrage (24) d'une seule pièce avec un épaulement d'appui (24.4), la force axiale générée par l'élément de serrage (24) par le mouvement de vissage agissant par le biais de l'épaulement d'appui (24.4) sur l'élément d'amortissement élastique (26).

2. Dispositif selon la revendication 1, **caractérisé en ce qu'**entre l'épaulement d'appui (24.4) et l'élément d'amortissement élastique (26) est disposé un disque (28) qui est réalisé de telle sorte que le frottement entre l'élément d'amortissement élastique (26) et le disque (28) soit supérieur au frottement entre le disque (28) et l'épaulement d'appui (24.4).

3. Dispositif selon la revendication 2, **caractérisé en ce qu'**au niveau de l'épaulement d'appui (24.4) est réalisé un dégagement (24.5) de telle sorte qu'un appui annulaire défini contre le disque (28) soit assuré.

4. Dispositif selon l'une quelconque des revendications 1 à 3, **caractérisé en ce que** la rainure de réception (26.4) ouverte vers l'extérieur divise l'élément d'amortissement élastique (26) en deux sections asymétriques de longueurs axiales différentes, la section plus longue (26.2) étant tournée vers l'unité de véhicule (10).

5. Dispositif selon l'une quelconque des revendications 1 à 4, **caractérisé en ce que** l'élément de serrage (24) d'une seule pièce est réalisé de telle sorte que l'épaulement d'appui (24.4) agisse d'abord sur l'élément d'amortissement élastique (26) lorsque la douille de serrage (24.3) est traversée en dessous de la rainure de réception (26.4) ouverte vers l'extérieur.

6. Dispositif selon l'une quelconque des revendications 1 à 5, **caractérisé en ce qu'**entre le tourillon de connexion (22.9) et la tige filetée (22.2), un premier collet annulaire (22.1) de plus grand diamètre est réalisé sur le goujon fileté (22), dont l'un des côtés frontaux constitue un épaulement de support (22.5) avec lequel le dispositif (20) s'appuie dans l'état monté sur le boîtier (14.1) de l'unité.

7. Dispositif selon la revendication 6, **caractérisé en ce que** l'autre côté frontal du premier collet annulaire (22.1) constitue un épaulement de butée (22.4) pour un côté frontal ouvert (24.6) de la douille de serrage (24.3).

8. Dispositif selon la revendication 6 ou 7, **caractérisé en ce qu'**entre l'épaulement de support (22.5) et l'épaulement d'appui (24.4), un deuxième collet annulaire (22.6) de plus grand diamètre est réalisé sur le goujon fileté (22), lequel coopère avec une rainure de réception (26.5), ouverte vers l'intérieur, de l'élément d'amortissement élastique (26) de telle sorte que l'élément d'amortissement élastique (26) soit retenu dans une position définie après l'enfoncement sur le goujon fileté (22).

9. Dispositif selon l'une quelconque des revendications 1 à 8, **caractérisé en ce qu'**au moins une région (24.7, 24.8) du filetage extérieur (22.3) sur la tige filetée (22.2) est réalisée de telle sorte que l'on obtienne au niveau de cette au moins une région un serrage accru entre l'élément de vissage vissé (24.1) et la tige filetée (22.2).

10. Unité de véhicule, en particulier unité fluidique d'un système de freinage de véhicule, qui est retenue par le biais d'au moins un dispositif (20), qui est connecté par le biais d'un alésage de réception correspondant (14.2) à un boîtier (14.1) de l'unité de véhicule, dans une console (30) fixée du côté du véhicule, laquelle présente au moins une ouverture de réception (34.1, 34.2, 34.3) associée à l'au moins un dispositif (20), **caractérisée en ce que** l'au moins un dispositif (20) est réalisé selon l'une quelconque des revendications 1 à 9.

11. Unité de véhicule selon la revendication 10, **caractérisée en ce que** le tourillon de connexion (22.9) du goujon fileté (22) de l'au moins un dispositif (20) est pressé ou vissé ou maté dans au moins un alésage de réception (14.2) du boîtier (14.1) de l'unité de véhicule (10).
